# EUROPEAN PATENT SPECIFICATION

(11) **EP 3 260 981 B1**
(45) Date of publication and mention of the grant of the patent: **28.11.2018**
(21) Application number: 17174572.2
(22) Date of filing: 06.06.2017
(51) Int. Cl.: G06F 11/14

(54) **INFORMATION PROCESSING APPARATUS, INFORMATION PROCESSING SYSTEM, AND INFORMATION PROCESSING METHOD FOR UPDATING FIRMWARE**
INFORMATIONSVERARBEITUNGSVORRICHTUNG, INFORMATIONSVERARBEITUNGSSYSTEM UND INFORMATIONSVERARBEITUNGSVERFAHREN UM FIRMWARE ZU AKTUALISIEREN
APPAREIL DE TRAITEMENT D'INFORMATIONS, SYSTÈME DE TRAITEMENT D'INFORMATIONS ET PROCÉDÉ DE TRAITEMENT D'INFORMATIONS POUR LA MISE À JOUR DE MICROPROGFRAMMES

(30) Priority: 24.06.2016 JP 2016125944
(43) Date of publication of application: 27.12.2017
(73) Proprietor: Ricoh Company, Ltd., Tokyo 143-8555 (JP)
(72) Inventor: ONO, Takayuki, Tokyo, 143-8555 (JP)
(74) Representative: White, Duncan Rohan

(56) References cited:
- US-A1- 2002 087 668
- US-A1- 2006 200 707
- US-A1- 2008 276 122
- US-A1- 2013 239 103

## Description

### BACKGROUND

### Technical Field

The present invention relates to an information processing apparatus and a method of processing information performed by the information processing apparatus.

### Background Art

The background information processing apparatus, after being reported that firmware is updated, downloads the firmware from an external server such as data centers etc. and updates previously installed firmware with newly downloaded one.

In this technology, in case of failing to update the firmware, the information processing apparatus does not boot up normally, and it is required to perform a recovery operation.

To cope with this issue, before updating firmware, a technology that backs up current firmware and setting data etc. and recovers automatically in case of failing to update the firmware is known (e.g., JP-2015-225478-A).

However, for example, in built-in information processing apparatuses, a size of a memory etc. for backing up the current firmware and current setting data etc. is not large enough, and it has been difficult to backup the current firmware and current setting data etc. As a result, in the known technology described above, in case of failing to update the firmware, it is difficult to perform recovery.

In view of the above, a technology that may perform recovery in case of failing to update firmware is desired.

US-A-2013239103 discloses a method in which configuration data are backed up in a server, the updated files are downloaded to the communication equipment from the server, the updated files are loaded to the communication equipment to implement the update, and the configuration data backed up in the server are recovered to the communication equipment.

US-A-2002087668 discloses discloses an automatic upgrade process which automatically upgrades software stored on a programmable device. The upgraded software may be tested, and based upon the results of the testing, either left in the upgraded state or returned to the pre-upgraded state from a backup file.

US-A-2008276122 discloses restoring the firmware and all programmable content of an optical drive.

### SUMMARY

The invention provides an information processing apparatus in accordance with claim 1 and a method as claimed in claim 9, and a computer-readable medium as claimed in claim 10. In the embodiments described below, an information processing apparatus that is capable of performing recovery in case of failing to update firmware is provided.

### BRIEF DESCRIPTION OF THE DRAWINGS

A more complete appreciation of the disclosure and many of the attendant advantages thereof will be readily obtained as the same becomes better understood by reference to the following detailed description when considered in conjunction with the accompanying drawings.
FIG. 1 is a diagram illustrating a configuration of an information processing system as an embodiment of the present invention;
FIG. 2 is a block diagram illustrating a hardware configuration of the information processing apparatus as an embodiment of the present invention;
FIG. 3 is a diagram illustrating functional blocks in the information processing system as an embodiment of the present invention;
FIG. 4 is a sequence chart illustrating an operation performed by the information processing system as an embodiment of the present invention;
FIG. 5 is a flowchart illustrating an operation of updating firmware performed by the information processing apparatus as an embodiment of the present invention;
FIG. 6 is a diagram illustrating a configuration of a recovery module as an embodiment of the present invention;
FIG. 7 is a flowchart illustrating a process of configuring an update history as an embodiment of the present invention;
FIG. 8 is a diagram illustrating update history data as an embodiment of the present invention;
FIG. 9 is a flowchart illustrating an operation of creating the recovery module as an embodiment of the present invention;
FIG. 10 is a diagram illustrating functional blocks in another information processing configuration;
FIG. 11 is a sequence chart illustrating an operation performed by the information processing system in said other configuration;
FIG. 12 is a flowchart illustrating an operation of updating firmware performed by the information processing apparatus in said other configuration, and
FIG. 13 is a flowchart illustrating an operation of creating the recovery module performed by a managing in said other configuration.

The accompanying drawings are intended to depict example embodiments of the present invention and should not be interpreted to limit the scope thereof.

### DETAILED DESCRIPTION

A more complete appreciation of the disclosure and many of the attendant advantages thereof will be readily obtained as the same becomes better understood by reference to the following detailed description when considered in conjunction with the accompanying drawings.

Embodiments of the present invention are described below in detail with reference to figures. In figures, same symbols are assigned to same or corresponding parts, and their descriptions are simplified or omitted appropriately.

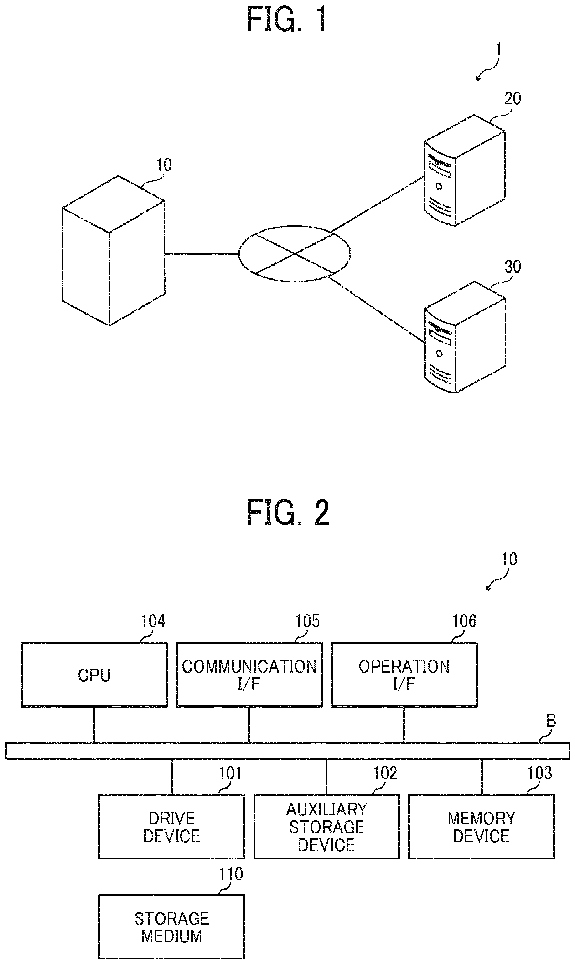

Exemplary embodiments of this disclosure are now described below with reference to the accompanying drawings. FIG. 1 is a diagram illustrating a configuration of an information processing system 1 in this embodiment. In FIG. 1, the information processing system 1 includes an information processing apparatus 10, a managing server 20, and a file server 30. The information processing apparatus 10 and the managing server 20 are communicably connected with each other via a communication network such as the internet and a local area network (LAN) etc.

Examples of the information processing apparatus 10 are information processing apparatuses such as a built-in information processing apparatus, a personal computer, a projector, a teleconference system, and a digital camera etc.

FIG. 2 is a block diagram illustrating the hardware configuration of the information processing apparatus 10 in this embodiment.

The information processing apparatus 10 includes a drive device 101, a hard disk drive (HDD) 102, a memory 103, a central processing unit (CPU) 104, a communication interface (I/F) 105, and an operation I/F 106, and those components are connected with each other via a bus B.

The HDD 102 stores an installed program, as well as a required file and data etc. The memory 103 reads a program from the HDD 102 during startup and stores the program. Subsequently, the CPU 104 implements various operations (described later) in accordance with the program stored in the memory 103.

The communication I/F 105 consists of a USB port, a wireless LAN card, and a LAN card etc. and is used for connecting to the network.

The operation I/F 106 is implemented by using a keyboard and a display etc. and displays an operation screen for operating the information processing apparatus 10.

If an information processing method in this embodiment (described later) is implemented by a program, for example, the program may be provided by distributing a recording medium 110 and downloading the program from a network etc. Various types of the recording medium such as a recording medium that stores information optically, electrically, or magnetically such as a Compact Disc Read Only Memory (CD-ROM), a flexible disk, and a magnetic optical disc etc. and a semiconductor memory that stores information electrically such as a read only memory (ROM) and a flash memory etc. may be used for the recording medium 110.

After setting the recording medium 110 that the program in this embodiment in the drive device 101, the program is read from the recording medium 110 and installed in the HDD 102 via the drive device 101. In case of downloading the program from the network, the program is installed in the HDD 102 via the communication I/F 105.

The hardware configuration of the managing server 20 and the file server 30 may be similar to the hardware configuration of the information processing apparatus 10 illustrated in FIG. 2.

### First Embodiment

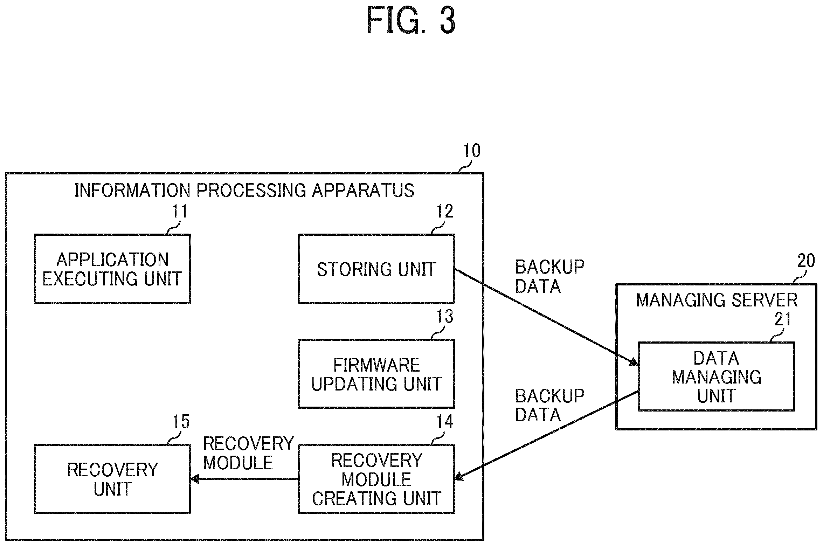

Next, descriptions are given below of a functional configuration of the information processing system 1 according to the present embodiment with reference to FIG. 3. FIG. 3 is a diagram illustrating functional blocks in the information processing system in this embodiment.

The information processing apparatus 10 includes an application executing unit 11, a storing unit 12, a firmware updating unit (an updating unit) 13, a recovery module creating unit 14, and a recovery unit 15. The components described above may be implemented by executing one or more programs installed in the information processing apparatus 10 by the CPU 104 included in the information processing apparatus 10.

The application executing unit 11 executes applications installed at the information processing apparatus 10. The storing unit 12 stores backup data used for recovery in case of failing to update firmware in the managing server 20. More specifically, the storing unit 12 corresponds to the CPU 104, which operates in cooperation with the communication I/F 105, to transmit a request for storing the backup data to be used for recovery, with the backup data.

The firmware updating unit 13 updates firmware installed in the information processing apparatus 10. The firmware is stored in any desired memory of the information processing apparatus 10.

In case of failing to update the firmware, the recovery module creating unit 14 creates recovery data using the backup data stored in the managing server 20. More specifically, the recovery module creating unit 14, which corresponds to the CPU 104 and the communication I/F 105, requests the managing server 20 for the backup data that is previously stored, and generates recovery data based on the received backup data.

In case of failing to update the firmware, the recovery unit 15 performs recovery using the recovery data created by the recovery module creating unit 14.

The managing server 20 includes a data managing unit (a managing unit) 21. The data managing unit 21 is implemented by executing one or more programs installed in the managing server 20 by the CPU 104 in the managing server 20, which operates in cooperation with hardware.

The data managing unit 21 receives the backup data such as data indicating a version of the firmware and setting data etc. from the information processing apparatus 10 and stores the backup data. It should be noted that the backup data may include data of firmware itself.

The data managing unit 21 requests the information processing apparatus 10 to update the firmware, and perform recovery if needed.

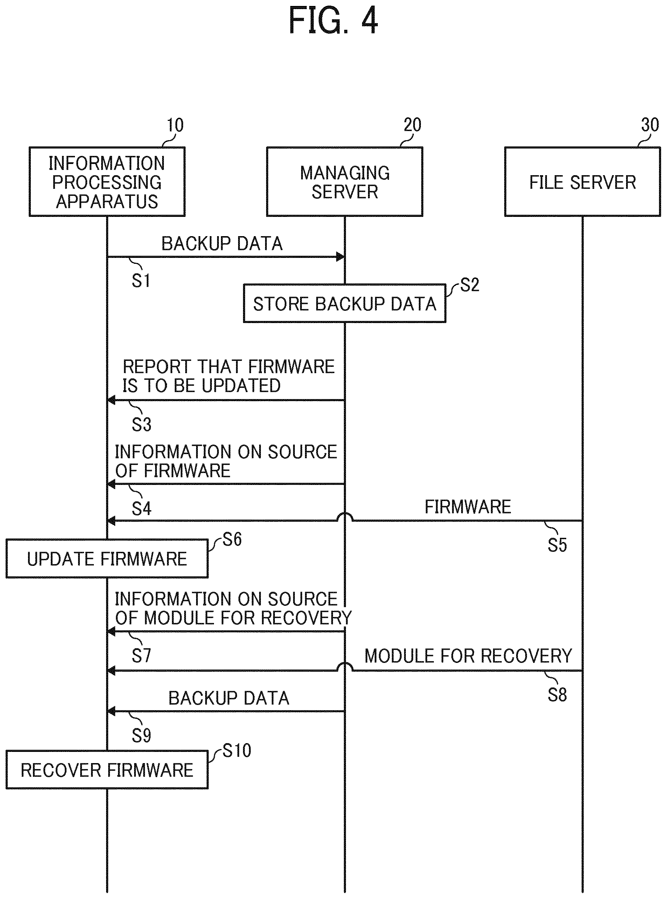

Next, with reference to FIG. 4, an operation performed by the information processing system 1 in this embodiment is described below. FIG. 4 is a sequence diagram illustrating an operation performed by the information processing system 1 in this embodiment.

First, regularly for example or before updating firmware, the storing unit 12 in the information processing apparatus 10 creates backup data such as data indicating the current version of the firmware and setting data etc. and transfers the backup data to the managing server 20 in S1.

Next, the data managing unit 21 in the managing server 20 stores the backup data received from the information processing apparatus 10 in S2.

If the managing server 20 detects that a new version of the firmware is registered in the file server 30, the managing server 20 reports that information to the information processing apparatus 10 in S3.

Next, the information processing apparatus 10 acquires information on the firmware to be updated (information such as a source URL of the firmware etc.) from the managing server 20 in S4.

Next, the information processing apparatus 10 acquires the updated firmware from the file server 30 in S5.

Next, the firmware updating unit 13 in the information processing apparatus 10 starts updating the firmware in S6.

Next, in case of detecting that the firmware fails to be updated, the recovery module creating unit 14 in the information processing apparatus 10 acquires information on a module for recovery (information such as a source URL of the module for recovery etc.) from the managing server 20 in S7. It should be noted that the data managing unit 21 may determine the information on the module for recovery in accordance with the data indicating the version of the firmware included in the backup data received from the information processing apparatus 10.

Next, the recovery module creating unit 14 in the information processing apparatus 10 acquires the module for recovery from the file server 30 in S8.

Next, the recovery module creating unit 14 in the information processing apparatus 10 acquires the backup data from the managing server 20 in S9.

Next, the recovery unit 15 in the information processing apparatus processing apparatus 10 performs recovery based on the module for recovery and the backup data in S10.

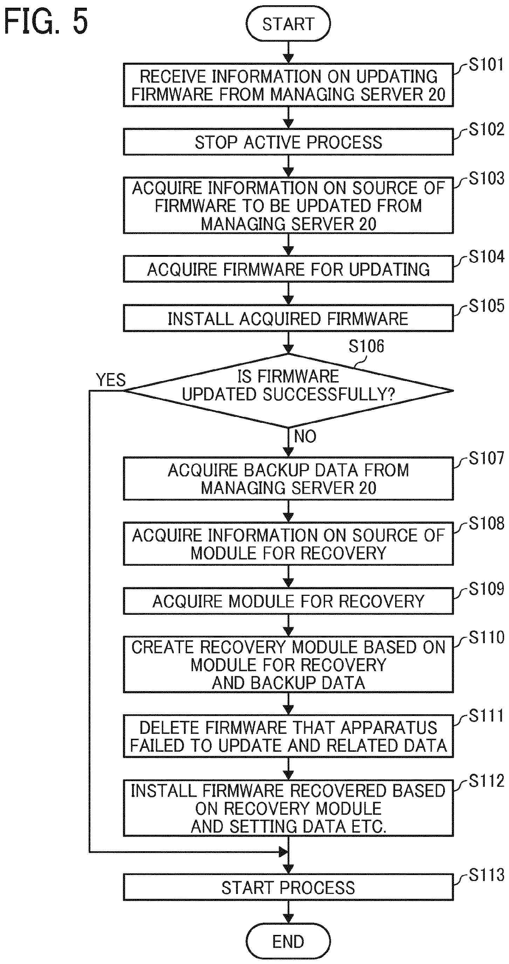

Next, with reference to FIG. 5, an operation of updating firmware performed by the information processing apparatus 10 is described below. FIG. 5 is a flowchart illustrating an operation of updating firmware performed by the information processing apparatus 10 in this embodiment.

The firmware updating unit 13 receives update information on the firmware from the managing server 20 in S101.

Next, the firmware updating unit 13 requests the application executing unit 11 to quit a process currently running in S102.

Next, the firmware updating unit 13 acquires source information on the firmware to be updated (information such as a source URL of the firmware etc.) from the managing server 20 in S103.

Next, the firmware updating unit 13 acquires update firmware from the file server 30 in accordance with the source information of the firmware in S104.

Next, the firmware updating unit 13 applies the acquired firmware to the application executing unit 11 in S105.

Next, the recovery unit 15 determines whether or not the firmware succeeds in updating in S106.

If the firmware succeeds in updating (YES in S106), the operation proceeds to S112 (described later).

If the firmware does not succeed in updating (NO in S106), the recovery module creating unit 14 acquires the backup data form the managing server 20 in S107.

Next, the recovery module creating unit 14 acquires the source information of the module for recovery from the managing server 20 in S108.

Next, the recovery module creating unit 14 acquires the module for recovery from the file server 30 in accordance with the source information of the module for recovery in S109.

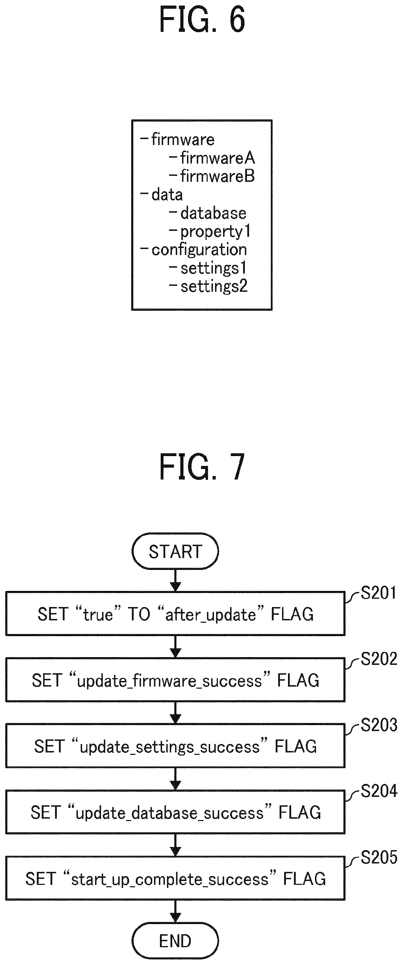

Next, the recovery module creating unit 14 creates the recovery module based on the module for recovery and the backup data in S110. FIG. 6 is a diagram illustrating a configuration of the recovery module in this embodiment. The configuration of the recovery module may be similar to the module configuration that the information processing apparatus 10 operates. For example, if the module configuration that the information processing apparatus 10 operation is the configuration illustrated in FIG. 6, the configuration of the recovery module may be similar to the configuration illustrated in FIG. 6.

Next, the recovery unit 15 deletes the firmware that failed to be updated and related data in S111.

Next, the recovery unit 15 applies the firmware updated based on the recovery module and the setting data etc. to the application executing unit 11 in S112.

Next, in S113, the recovery unit 15 requests the application executing unit 11 to start the process quitted in S102, and the operation ends.

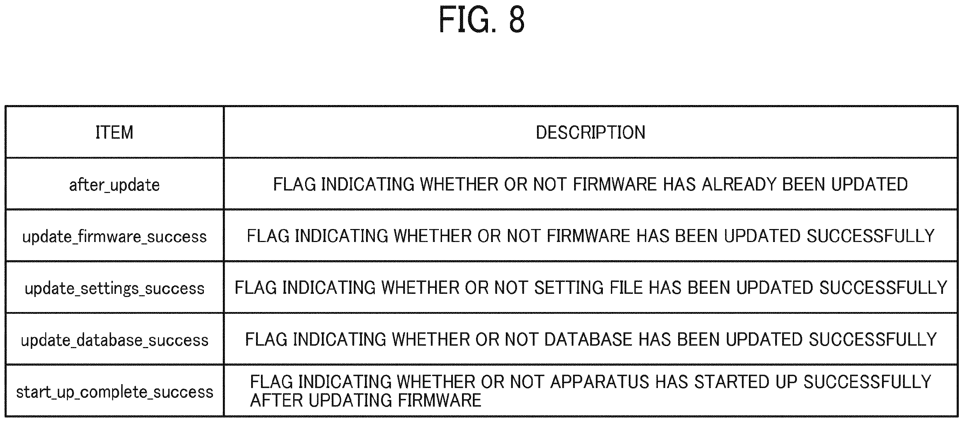

Next, with reference to FIGs. 7 and 8, an operation of configuring an updating history performed in determining whether or not the firmware succeeds in updating in S106 is described below. FIG. 7 is a flowchart illustrating the operation of configuring an update history in this embodiment.

The recovery module creating unit 14 sets "after_update" flag to "true" in the update history data 141 in S201.

Next, the recovery module creating unit 14 configures "update_firmware_success" flag in S202. If the firmware succeeds in installation, the recovery module creating unit 14 sets "update-firmware-success" flag to "true", and if the firmware does not succeed in installation (fails to install), the recovery module creating unit 14 sets "update_firmware_success" flag to "false".

Next, the recovery module creating unit 14 configures "update_settings_success" flag in S203. If the setting file succeeds in configuration (update), the recovery module creating unit 14 sets "update_settings_success" flag to "true", and if the setting file does not succeed in configuration (fails to update), the recovery module creating unit 14 sets "update_settings_success" flag to "false".

Next, the recovery module creating unit 14 configures "update_database_success" flag in S204. If the database used by an application succeeds in configuration (update), the recovery module creating unit 14 sets "update_database_success" flag to "true", and if the database used by the application does not succeed in configuration (fails to update), the recovery module creating unit 14 sets "update_database_success" flag to "false".

Next, the recovery module creating unit 14 configures "start_up_complete_success" flag in S205. If the apparatus succeeds in boot-up after updating firmware, the recovery module creating unit 14 sets "start_up_complete_success" flag to "true", and if the apparatus does not succeed in boot-up after updating firmware, the recovery module creating unit 14 sets "start_up_complete_success" flag to "false".

FIG. 8 is a diagram illustrating the update history data 141 in this embodiment. In FIG. 8, "after_update" is a flag indicating whether the firmware is updated or not. "update_firmware_success" is a flag indicating whether or not the firmware succeeds in updating. "update_settings_success" is a flag indicating whether or not the configuration file succeeds in updating. "update_database_success" is a flag indicating whether or not the database succeeds in updating. "start_up_complete_success" is a flag indicating whether or not the apparatus succeeds in boot-up after updating firmware.

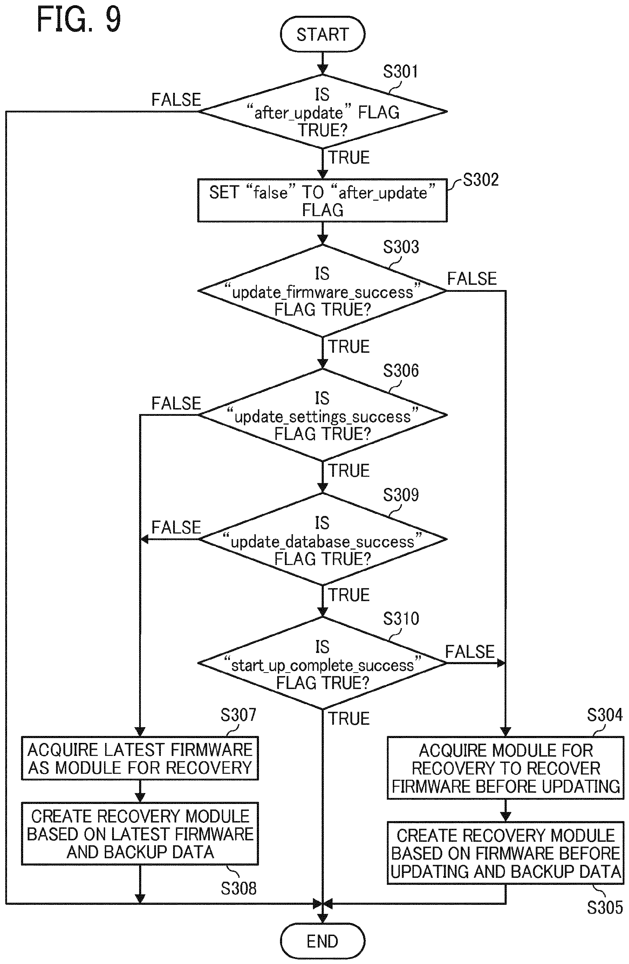

Next, with reference to FIG. 9, an operation of acquiring the module for recovery and creating the recovery module in S109 and S110 is described below. FIG. 9 is a flowchart illustrating an operation of creating the recovery module in this embodiment.

The recovery module creating unit 14 checks "after_update" flag in the update history data 141 in S301.

If "after_update" flag is set to "false" ("false" in S301), the operation ends.

If "after_update" flag is set to "true" ("true" in S301), the recovery module creating unit 14 sets "after_update" flag to "false" in S302 and checks "update_firmware_success" flag in S303.

If "update_firmware_success" flag is set to "false" ("false" in S303), the recovery module creating unit 14 acquires the module for recovery in order to recover the firmware before the update from the file server 30 in S304.

Next, the recovery module creating unit 14 creates the recovery module based on the acquired module for recovery and backup data in S305, and the operation ends.

As a result, for example, in the information processing apparatus 10, if the firmware used for the update is not appropriate, it is possible to revert the apparatus to the status before the update. The information for identifying the module for recovery to recover the firmware before the update may be stored in the information processing apparatus 10 or acquired from the backup data transferred by the managing server 20.

If "update_firmware_success" flag is set to "true" ("true" in S303), the recovery module creating unit 14 checks "update_settings_success" flag in S306.

If "update_settings_success" flag is set to "false" ("false" in S306), the recovery module creating unit 14 acquires the latest firmware as the module for recovery from the file server 30 in S307.

Next, the recovery module creating unit 14 creates the recovery module based on the latest firmware and backup data in S308, and the operation ends. As a result, in case the firmware succeeds in updating and it is possible to boot up the apparatus normally if the setting data is updated appropriately, by using the latest firmware and the setting data included in the backup data acquired from the managing server 20, it is possible to transition the apparatus to the status that the firmware succeeds in updating normally.

If "update_settings_success" flag is set to "true" ("true" in S306), the recovery module creating unit 14 checks "update_database_success" flag in S309.

If "update_database_success" flag is set to "false" ("false" in S309), the operation proceeds to step S307. As a result, in case the firmware succeeds in updating and it is possible to boot up the apparatus normally if the database is updated appropriately, by using the latest firmware and the database included in the backup data acquired from the managing server 20, it is possible to transition the apparatus to the status that the firmware succeeds in updating normally.

If "update_database_success" flag is set to "true" ("true" in S309), the recovery module creating unit 14 checks "start_up_complete_success" flag in S310.

If "start_up_complete_success" flag is set to "false" ("false" in S310), the operation proceeds to step S304. As a result, while all of the firmware, setting file, and database are updated normally, the apparatus is in an irregular status if the apparatus may not boot up. To cope with this issue, it is possible to revert the apparatus to the normal operating status before the update.

If "start_up_complete_success" flag is set to "true" ("true" in S310), the operation ends.

### Non-claimed configuration

In the first embodiment, the case that the information processing apparatus 10 includes the recovery module creating unit 14 is described above. By contrast, in this configuration, a case that the managing server 20 includes a recovery module creating unit 22 is described below. Some parts of this configuration are similar to the first embodiment. Therefore, descriptions for those parts are omitted appropriately.

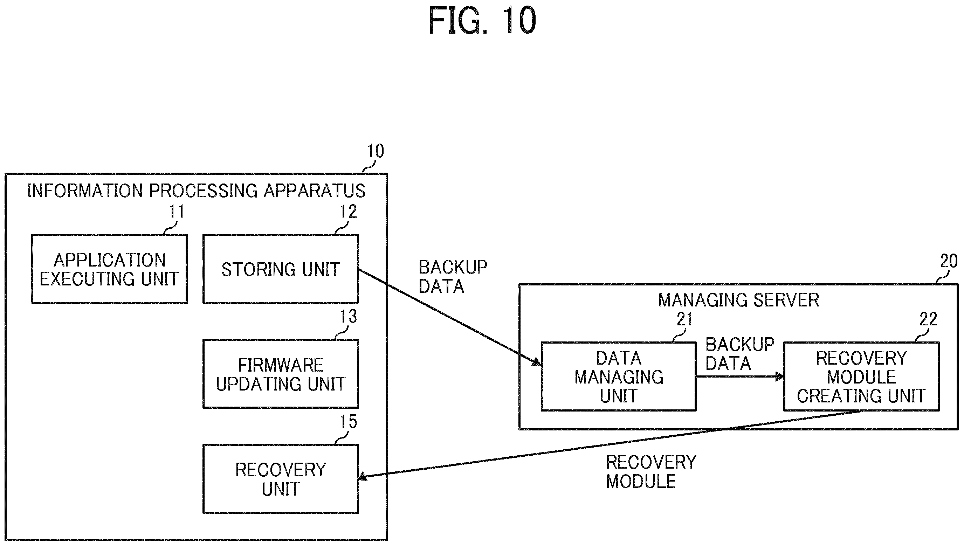

Next, descriptions are given below of a functional configuration of the information processing system 1 according to such a configuration with reference to FIG. 10. FIG. 10 is a diagram illustrating functional blocks in the information processing system 1 in this embodiment. In comparison with the first embodiment, in this configuration, the information processing apparatus 10 does not include the recovery module creating unit 14, and the managing server 20 includes a recovery module creating unit 22.

In the below description, regarding a detail of an operation performed by the information processing system 1 in this configration, points different from the first embodiment are described below.

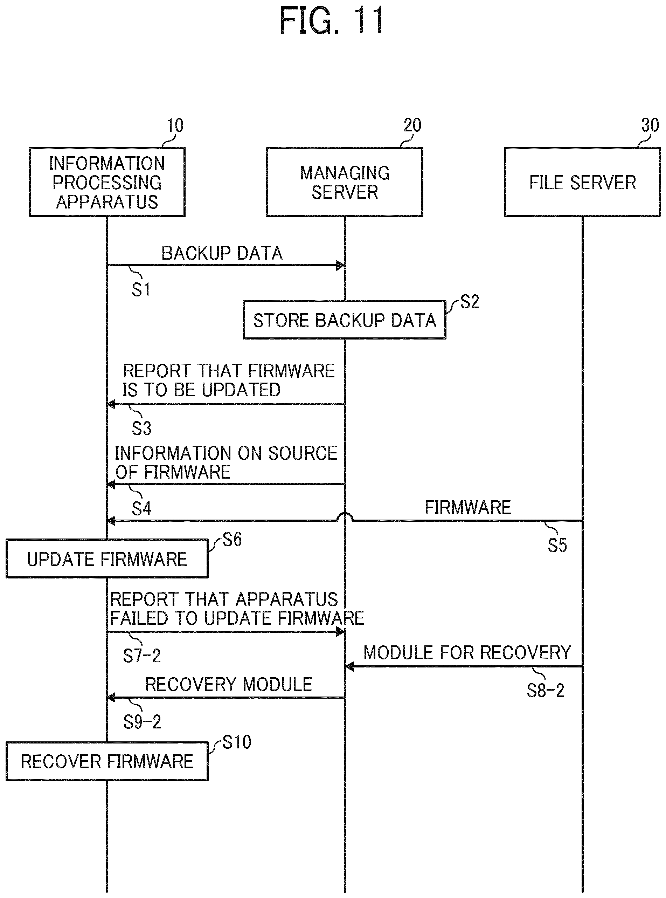

FIG. 11 is a sequence chart illustrating an operation performed by the information processing system 1 in this configuration.

Operations in steps S1 to S6 are similar to the operations in the first embodiment illustrated in FIG. 4.

After detecting that the firmware failed to be updated, the information processing apparatus 10 reports to the managing server 20 that the firmware failed to be updated and a reason of failure (the update history data in FIG. 8) in S7-2.

Next, the recovery module creating unit 22 in the managing server 20 acquires the module for recovery in accordance with the reason of failure from the file server 30 in S8-2.

Next, the recovery module creating unit 22 in the managing server 20 creates the recovery module based on the module for recovery and the backup data and transfers the created recovery module to the information processing apparatus 10 in S9-2. It should be noted that the recovery module creating unit 22 creates the recovery module by performing the operation similar to the operation of creating recovery module illustrated in FIG. 9.

Next, the recovery unit 15 in the information processing apparatus 10 performs recovery based on the recovery module acquired from the managing server 20 in S10-2.

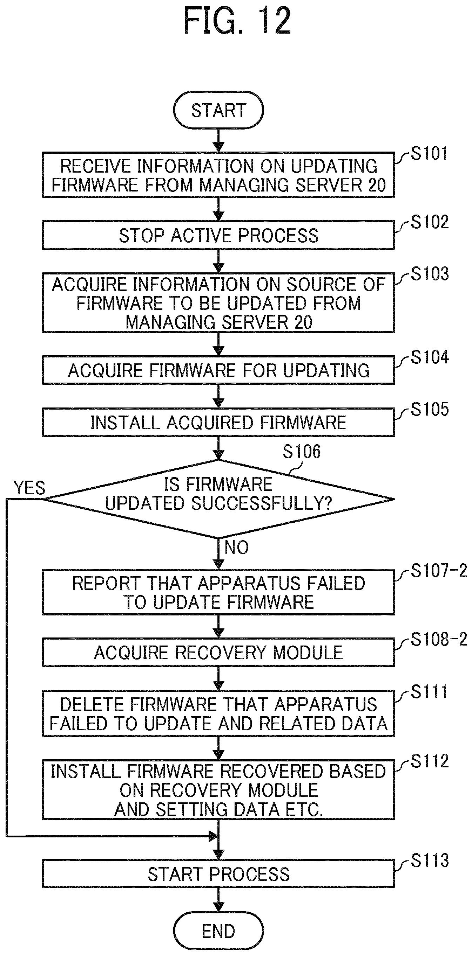

Next, with reference to FIG. 12, an operation of updating firmware performed by the information processing apparatus 10 is described below. FIG. 12 is a flowchart illustrating an operation of updating firmware performed by the information processing apparatus 10 in this configuration.

Operations in steps S101 to S106 are similar to the operations in the first embodiment illustrated in FIG. 5.

In case of failing to update firmware (NO in S106), the firmware updating unit 13 reports to the managing server 20 that the firmware failed to be updated and a reason of failure (the update history data in FIG. 8) in S107-2.

Next, the recovery unit 15 acquires the recovery module from the managing server 20 in S108-2.

Next, the recovery unit 15 deletes the firmware that failed to be updated and related data in S111.

Next, the recovery unit 15 applies the firmware updated based on the recovery module and the setting data etc. to the application executing unit 11 in S112.

Next, in S113, the recovery unit 15 requests the application executing unit 11 to start the process quitted in S102, and the operation ends.

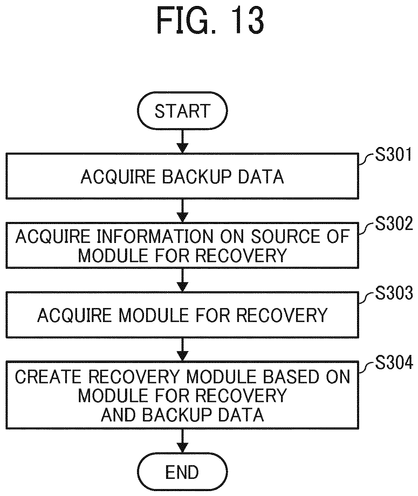

Next, with reference to FIG. 13, an operation of creating the recovery module performed by the managing server 20 in this configuration is described below. FIG. 13 is a flowchart illustrating an operation of creating the recovery module performed by the managing server 20 in this configuration.

Next, the recovery module creating unit 22 acquires the backup data of the information processing apparatus 10 from the data managing unit 21 in S301.

Next, the recovery module creating unit 22 acquires the source information of the module for recovery from the data managing unit 21 in S302.

Next, the recovery module creating unit 22 acquires the module for recovery from the file server 30 in accordance with the source information of the module for recovery in S303.

Next, the recovery module creating unit 22 creates the recovery module based on the module for recovery and the backup data in S304.

For example, in built-in information processing apparatuses, a size of a memory etc. for backing up the current firmware and current setting data etc. is not large enough, and it is difficult to backup the current firmware and current setting data etc. in some cases. In addition, if the information processing apparatus is configured so that it is difficult to access the information processing apparatus externally to check the operating status and manage files by user operation, a maintenance person needs to go to the spot, or it is required to retrieve the information processing apparatus, perform recovery, and update the firmware.

As described above, the information processing apparatus stores the backup data used for recovery in case of failing to update firmware in the managing server. Subsequently, in case of failing to update firmware, the information processing apparatus performs recovery by using the backup data stored in the managing server. As a result, in case of failing to update firmware, it is possible to perform recovery.

The configuration of the remote managing system as described above is just an example, and it is possible to configure the remote managing system in various ways depending on usage and purpose. For example, it is possible to implement the managing server 20 and the file server 30 as a unitary apparatus.

The embodiments described above provide the information processing apparatus that may perform recovery in case of failing to update firmware.

The present invention also encompasses carrier means such as a recording medium storing a program that executes an information processing method, performed by an information processing apparatus. The information processing method, performed by the information processing apparatus, includes the steps of storing backup data used for recovery in case of failing to update firmware in a managing server, updating the firmware, and performing recovery using the backup data stored in the managing server in case of failing to update the firmware.

Numerous additional modifications and variations are possible in light of the above teachings. It is therefore to be understood that within the scope of the appended claims, the disclosure of the present invention may be practiced otherwise than as specifically described herein.

As can be appreciated by those skilled in the computer arts, this invention may be implemented as convenient using a conventional general-purpose digital computer programmed according to the teachings of the present specification. Appropriate software coding can readily be prepared by skilled programmers based on the teachings of the present disclosure, as will be apparent to those skilled in the software arts. The present invention may also be implemented by the preparation of application-specific integrated circuits or by interconnecting an appropriate network of conventional component circuits, as will be readily apparent to those skilled in the relevant art.

The present invention can be implemented in any convenient form, for example using dedicated hardware, or a mixture of dedicated hardware and software. The present invention may be implemented as computer software implemented by one or more networked processing apparatuses. The network can comprise any conventional terrestrial or wireless communications network, such as the Internet. The processing apparatuses can compromise any suitably programmed apparatuses such as a general purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium. The carrier medium can also comprise a storage medium for storing processor readable code such as a floppy disk, hard disk, CD ROM, magnetic tape device or solid state memory device.

The hardware platform includes any desired kind of hardware resources including, for example, a central processing unit (CPU), a random access memory (RAM), and a hard disk drive (HDD). The CPU may be implemented by any desired kind of any desired number of processor. The RAM may be implemented by any desired kind of volatile memory. The HDD may be implemented by any desired kind of non-volatile memory capable of storing a large amount of data. The hardware resources may additionally include an input device, an output device, or a network device, depending on the type of the apparatus. Alternatively, the HDD may be provided outside of the apparatus as long as the HDD is accessible. In this example, the CPU, such as a cache memory of the CPU, and the RAM may function as a physical memory or a primary memory of the apparatus, while the HDD may function as a secondary memory of the apparatus.

## Claims

1. An information processing apparatus (10), comprising:
a storing unit (12) to instruct a managing server (20) to store backup data to be used for recovery in case of failing to update first firmware previously installed in the information processing apparatus (10) with second firmware;
an updating unit (13) to update the first firmware with the second firmware; and
a recovery unit (15) to perform recovery using a recovery module when the updating unit (13) fails to update the first firmware,
**characterized by** a recovery module creating unit configured for creating the recovery module by including the backup data stored in the managing server (20) and a module for recovery obtained from a file server (30) in accordance with a reason for failure, wherein the module for recovery is the first firmware when the update to the second firmware is deemed to fail and is the second firmware when the update is deemed to have succeeded but it is deemed that any one of a, setting file or a database file is deemed not to have been updated successfully.

2. The information processing apparatus (10) according to claim 1,
wherein the recovery unit (15) acquires the backup data and the second firmware via a communication network.

3. The information processing apparatus (10) according to any one of claims 1 and 2,
wherein the backup data stored in the managing server (20) includes setting data of the second firmware or data to be used by an application installed in the information processing apparatus, and
the recovery unit (15) performs recovery using the second firmware after update in case of failing to configure the second firmware or failing to configure the data to be used by the application installed in the information processing apparatus.

4. The information processing apparatus (10) according to any one of claims 1 to 3,
wherein the recovery unit (15) performs recovery using the first firmware before update in case of failing to install the second firmware or failing to boot up the information processing apparatus (10) after updating the first firmware.

5. The information processing apparatus according to any one previous claim wherein the backup data to be used for recovery includes setting data and at least data regarding a version of the current firmware and optionally data of the current firmware itself.

6. An information processing system (1), comprising the information processing apparatus (10) of any one of claims 1 to 5; and
a managing server (20) connected to the information processing apparatus (10) through a network, the managing server (20) including a managing unit (21) to manage the backup data received from the information processing apparatus (10).

7. The information processing system of claim 6 wherein the backup data to be used for recovery includes at least the version of the first firmware and the managing server (20) is configured to detect whether there is a new version of the firmware registered in a file server (30) and, if so, to report that information to the information processing apparatus.

8. The information processing system of claim 7, wherein the managing unit (21) determines the information on the module for recovery in accordance with the data indicating the version of the firmware included in the backup data received from the information processing apparatus (10).

9. A method of processing information performed by an information processing apparatus (10), the method comprising:
instructing a managing server (20) to store backup data to be used for recovery in case of failing to update first firmware previously installed in the information processing apparatus (10) with second firmware;
updating the first firmware with the second firmware; and
performing recovery using a recovery module when the updating fails to update the first firmware,
**characterized by** creating the recovery module by including the backup data stored in the managing server (20) and a module for recovery obtained from a file server (30) in accordance with a reason for failure, wherein the module for recovery is the first firmware when the update to the second firmware is deemed to fail and is the second firmware when the update is deemed to have succeeded but it is deemed that any one of a setting file or a database file is deemed not to have been updated successfully.

10. A computer readable medium carrying computer readable code for controlling a computer to carry out the method of claim 9.

## Patentansprüche

1. Informationsverarbeitungsvorrichtung (10), umfassend:
eine Speichereinheit (12), um einen Verwaltungsserver (20) anzuweisen, Sicherungsdaten zu speichern, die zur Wiederherstellung verwendet werden sollen, falls es nicht gelingt, zuvor in der Informationsverarbeitungsvorrichtung (10) installierte erste Firmware mit zweiter Firmware zu aktualisieren;
eine Aktualisierungseinheit (13), um die erste Firmware mit der zweiten Firmware zu aktualisieren; und
eine Wiederherstellungseinheit (15), um die Wiederherstellung unter Verwendung eines Wiederherstellungsmoduls durchzuführen, wenn es der Aktualisierungseinheit (13) nicht gelingt, die erste Firmware zu aktualisieren,
**gekennzeichnet durch** eine Wiederherstellungsmodul-Erzeugungseinheit, die zum Erzeugen des Wiederherstellungsmoduls konfiguriert ist, indem sie die im Verwaltungsserver (20) gespeicherten Sicherungsdaten und ein Modul zur Wiederherstellung, das von einem Dateiserver (30) gemäß einem Grund für das Nichtgelingen erhalten wurde, einschließt, worin das Modul zur Wiederherstellung die erste Firmware ist, wenn die Aktualisierung auf die zweite Firmware als fehlgeschlagen eingeschätzt wird, und die zweite Firmware ist, wenn die Aktualisierung als erfolgreich eingeschätzt wird, aber eingeschätzt wird, dass eine von einer Einstellungsdatei oder einer Datenbankdatei nicht erfolgreich aktualisiert worden ist.

2. Informationsverarbeitungsvorrichtung (10) nach Anspruch 1,
worin die Wiederherstellungseinheit (15) die Sicherungsdaten und die zweite Firmware über ein Kommunikationsnetzwerk erlangt.

3. Informationsverarbeitungsvorrichtung (10) nach einem der Ansprüche 1 und 2,
worin die im Verwaltungsserver (20) gespeicherten Sicherungsdaten Einstellungsdaten der zweiten Firmware oder durch eine in der Informationsverarbeitungsvorrichtung installierte Anwendung zu verwendende Daten einschließen, und
die Wiederherstellungseinheit (15) die Wiederherstellung unter Verwendung der zweiten Firmware nach der Aktualisierung durchführt, falls es nicht gelingt, die zweite Firmware zu konfigurieren, oder es nicht gelingt, die durch die in der Informationsverarbeitungsvorrichtung installierte Anwendung zu verwendenden Daten zu konfigurieren.

4. Informationsverarbeitungsvorrichtung (10) nach einem der Ansprüche 1 bis 3,
worin die Wiederherstellungseinheit (15) die Wiederherstellung unter Verwendung der ersten Firmware vor der Aktualisierung durchführt, falls es nicht gelingt, die zweite Firmware zu installieren, oder es nicht gelingt, die Informationsverarbeitungsvorrichtung (10) nach dem Aktualisieren der ersten Firmware hochzufahren.

5. Informationsverarbeitungsvorrichtung nach einem der vorhergehenden Ansprüche, worin die zur Wiederherstellung zu verwendenden Sicherungsdaten Einstellungsdaten und zumindest Daten bezüglich einer Version der aktuellen Firmware und optional Daten der aktuellen Firmware selbst einschließen.

6. Informationsverarbeitungssystem (1), umfassend die Informationsverarbeitungsvorrichtung (10) nach einem der Ansprüche 1 bis 5; und
einen Verwaltungsserver (20), der über ein Netzwerk mit der Informationsverarbeitungsvorrichtung (10) verbunden ist, wobei der Verwaltungsserver (20) eine Verwaltungseinheit (21) einschließt, um die von der Informationsverarbeitungsvorrichtung (10) empfangenen Sicherungsdaten zu verwalten.

7. Informationsverarbeitungssystem nach Anspruch 6, worin die zur Wiederherstellung zu verwendenden Sicherungsdaten mindestens die Version der ersten Firmware einschließen und der Verwaltungsserver (20) dafür konfiguriert ist, zu ermitteln, ob in einem Dateiserver (30) eine neue Version der Firmware registriert ist, und, wenn ja, diese Information an die Informationsverarbeitungsvorrichtung zu melden.

8. Informationsverarbeitungssystem nach Anspruch 7, worin die Verwaltungseinheit (21) die Information über das Modul zur Wiederherstellung gemäß den Daten bestimmt, welche die Version der Firmware angeben, die in den von der Informationsverarbeitungsvorrichtung (10) empfangenen Sicherungsdaten eingeschlossen ist.

9. Verfahren zum Verarbeiten von Information, durchgeführt durch eine Informationsverarbeitungsvorrichtung (10), wobei das Verfahren umfasst:
Anweisen eines Verwaltungsservers (20), Sicherungsdaten zu speichern, die zur Wiederherstellung zu verwenden sind, falls es nicht gelingt, zuvor in der Informationsverarbeitungsvorrichtung (10) installierte erste Firmware mit zweiter Firmware zu aktualisieren;
Aktualisieren der ersten Firmware mit der zweiten Firmware; und
Durchführen einer Wiederherstellung unter Verwendung eines Wiederherstellungsmoduls, wenn es der Aktualisierung nicht gelingt, die erste Firmware zu aktualisieren,
**gekennzeichnet durch**: Erzeugen des Wiederherstellungsmoduls durch Einschließen der im Verwaltungsserver (20) gespeicherten Sicherungsdaten und eines von einem Dateiserver (30) gemäß einem Grund für das Nichtgelingen erhaltenen Wiederherstellungsmoduls, worin das Modul zur Wiederherstellung die erste Firmware ist, wenn die Aktualisierung auf die zweite Firmware als fehlgeschlagen eingeschätzt wird, und die zweite Firmware ist, wenn die Aktualisierung als erfolgreich eingeschätzt wird, aber eingeschätzt wird, dass eine von einer Einstellungsdatei oder einer Datenbankdatei nicht erfolgreich aktualisiert worden ist.

10. Computerlesbares Medium, das computerlesbaren Code zum Steuern eines Computers, damit er das Verfahren nach Anspruch 9 ausführt, umfasst.

## Revendications

1. Appareil de traitement d'information (10), comprenant :
une unité de stockage (12) pour demander en instruction à un serveur de gestion (20) de stocker des données de secours qui sont destinées à être utilisées pour une reprise dans le cas d'un échec à mettre à jour un premier microprogramme qui a été installé au préalable dans l'appareil de traitement d'information (10) au moyen d'un second microprogramme ;
une unité de mise à jour (13) pour mettre à jour le premier microprogramme au moyen du second microprogramme ; et
une unité de reprise (15) pour réaliser une reprise en utilisant un module de reprise lorsque l'unité de mise à jour (13) échoue à mettre à jour le premier microprogramme ;
**caractérisé par** une unité de création de module de reprise qui est configurée pour créer le module de reprise en incluant les données de secours qui sont stockées dans le serveur de gestion (20) et un module pour reprise qui est obtenu à partir d'un serveur de fichiers (30) conformément à une raison de l'échec, dans lequel le module pour reprise est le premier microprogramme lorsque la mise à jour selon le second microprogramme est estimée comme étant en échec et est le second microprogramme lorsque la mise à jour est estimée comme ayant été couronnée de succès mais qu'il est estimé qu'un fichier pris parmi un fichier de configuration et un fichier de base de données n'a pas été mis à jour avec succès.

2. Appareil de traitement d'information (10) selon la revendication 1,
dans lequel l'unité de reprise (15) acquiert les données de secours et le second microprogramme via un réseau de communication.

3. Appareil de traitement d'information (10) selon l'une quelconque des revendications 1 et 2,
dans lequel les données de secours qui sont stockées dans le serveur de gestion (20) incluent des données de configuration du second microprogramme ou des données qui sont destinées à être utilisées par une application qui est installée dans l'appareil de traitement d'information ; et
l'unité de reprise (15) réalise une reprise en utilisant le second microprogramme après la mise à jour dans le cas d'un échec à configurer le second microprogramme ou d'un échec à configurer les données qui sont destinées à être utilisées par l'application qui est installée dans l'appareil de traitement d'information.

4. Appareil de traitement d'information (10) selon l'une quelconque des revendications 1 à 3,
dans lequel l'unité de reprise (15) réalise une reprise en utilisant le premier microprogramme avant la mise à jour dans le cas d'un échec à installer le second microprogramme ou d'un échec à démarrer l'appareil de traitement d'information (10) après la mise à jour du premier microprogramme.

5. Appareil de traitement d'information selon l'une quelconque des revendications qui précèdent, dans lequel les données de secours qui sont destinées à être utilisées pour la reprise incluent des données de configuration et au moins des données qui concernent une version du microprogramme courant et en option, des données du microprogramme courant lui-même.

6. Système de traitement d'information (1), comprenant l'appareil de traitement d'information (10) selon l'une quelconque des revendications 1 à 5 ; et
un serveur de gestion (20) qui est connecté à l'appareil de traitement d'information (10) par l'intermédiaire d'un réseau, le serveur de gestion (20) incluant une unité de gestion (21) pour gérer les données de secours qui sont reçues depuis l'appareil de traitement d'information (10).

7. Système de traitement d'information selon la revendication 6, dans lequel les données de secours qui sont destinées à être utilisées pour la reprise incluent au moins la version du premier microprogramme, et le serveur de gestion (20) est configuré de manière à ce qu'il détecte si oui ou non il y a une nouvelle version du microprogramme qui est enregistrée dans un serveur de fichiers (30) et s'il en est ainsi, de manière à ce qu'il rapporte cette information à l'appareil de traitement d'information.

8. Système de traitement d'information selon la revendication 7, dans lequel l'unité de gestion (21) détermine l'information concernant le module pour reprise conformément aux données qui indiquent la version du microprogramme et qui sont incluses dans les données de secours qui sont reçues depuis l'appareil de traitement d'information (10).

9. Procédé de traitement d'information réalisé par un appareil de traitement d'information (10), le procédé comprenant :
la demande en instruction à un serveur de gestion (20) de stocker des données de secours qui sont destinées à être utilisées pour une reprise dans le cas d'un échec à mettre à jour un premier microprogramme qui a été installé au préalable dans l'appareil de traitement d'information (10) au moyen d'un second microprogramme ;
la mise à jour du premier microprogramme au moyen du second microprogramme ; et
la réalisation d'une reprise en utilisant un module de reprise lorsque la mise à jour échoue à mettre à jour le premier microprogramme ;
**caractérisé par** la création du module de reprise en incluant les données de secours qui sont stockées dans le serveur de gestion (20) et un module pour reprise qui est obtenu à partir d'un serveur de fichiers (30) conformément à une raison de l'échec, dans lequel le module pour reprise est le premier microprogramme lorsque la mise à jour selon le second microprogramme est estimée comme étant en échec et est le second microprogramme lorsque la mise à jour est estimée comme ayant été couronnée de succès mais qu'il est estimé qu'un fichier pris parmi un fichier de configuration ou un fichier de base de données n'a pas été mis à jour avec succès.

10. Support d'information lisible par informatique porteur d'un code lisible par informatique pour commander un moyen informatique de sorte qu'il mette en oeuvre le procédé selon la revendication 9.
